# EUROPEAN PATENT SPECIFICATION

(11) **EP 1 604 116 B1**
(45) Date of publication and mention of the grant of the patent: **22.12.2010**
(21) Application number: 04757940.4
(22) Date of filing: 19.03.2004
(51) Int. Cl.: F04D 27/00, F04D 25/16

(54) **FAN ARRAY FAN SECTION IN AIR-HANDLING SYSTEMS**
LÜFTERABSCHNITT EINER LÜFTERANORDNUNG IN LUFTBEHANDLUNGSSYSTEMEN
ENSEMBLE SOUFFLANTE A SERIE DE SOUFFLANTES POUR SYSTEMES DE TRAITEMENT D'AIR

(30) Priority: 20.03.2003 US 456413 P
(43) Date of publication of application: 14.12.2005
(60) Divisional application: 08017758.7
(73) Proprietor: Huntair Inc., Tualatin, OR 97062 (US)
(72) Inventor: HOPKINS, Lawrence, G., Portland, OR 97266 (US)
(74) Representative: Hallam, Arnold Vincent
(86) International application number: PCT/US2004/008578
(87) International publication number: WO 2004/085928

(56) References cited:
- EP-A- 0 004 448
- WO-A1-96/19701
- DE-A1- 19 719 507
- US-A- 4 767 262
- US-A- 5 370 576
- US-A- 6 072 397
- US-A- 6 104 608
- US-A1- 2003 026 074

## Description

### BACKGROUND OF INVENTION

The present invention is directed to a fan array fan section utilized in an air-handling system.

Air-handling systems (also referred to as an air handler) have traditionally been used to condition buildings or rooms (hereinafter referred to as "structures"). An air-handling system is defined as a structure that includes components designed to work together in order to condition air as part of the primary system for ventilation of structures. The air-handling system may contain components such as cooling coils, heating coils, filters, humidifiers, fans, sound attenuators, controls, and other devices functioning to meet the needs of the structures. The air-handling system may be manufactured in a factory and brought to the structure to be installed or it may be built on site using the necessary devices to meet the functioning needs of the structure. The air-handling compartment 102 of the air-handling system includes the inlet plenum 112 prior to the fan inlet cone 104 and the discharge plenum 110. Within the air-handling compartment 102 is situated the fan unit 100 (shown as an inlet cone 104, a fan 106, and a motor 108), fan frame, and any appurtenance associated with the function of the fan (e.g. dampers, controls, settling means, and associated cabinetry). Within the fan 106 is a fan wheel (not shown) having at least one blade. The fan wheel has a fan wheel diameter that is measured from one side of the outer periphery of the fan wheel to the opposite side of the outer periphery of the fan wheel. The dimensions of the handling compartment 102 such as height, width, and airway length are determined by consulting fan manufacturers data for the type of fan selected.

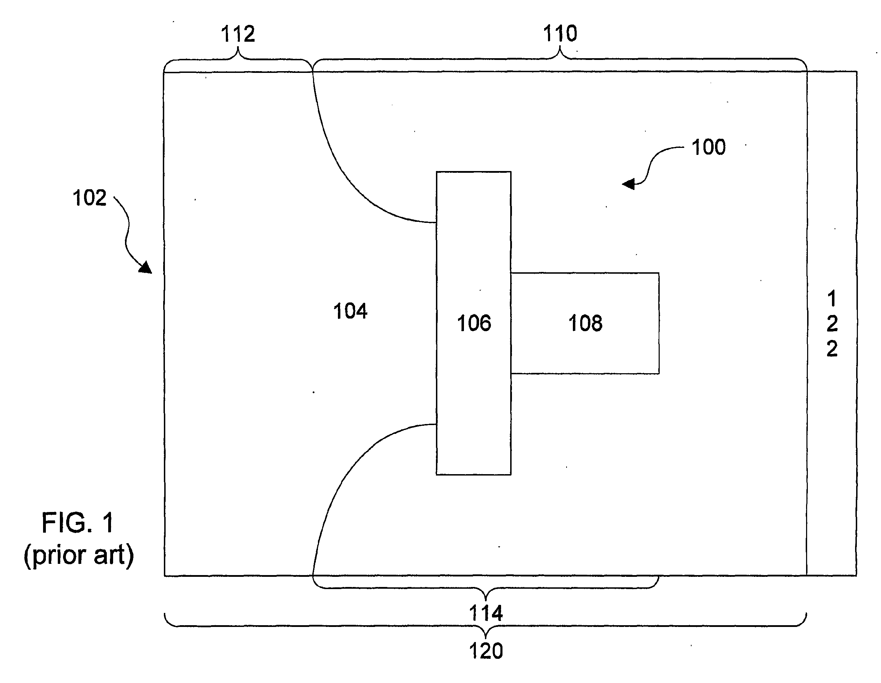

FIG. 1 shows an exemplary prior art air-handling system having a single fan unit 100 housed in an air-handling compartment 102. For exemplary purposes, the fan unit 100 is shown having an inlet cone 104, a fan 106, and a motor 108. Larger structures, structures requiring greater air volume, or structures requiring higher or lower temperatures have generally needed a larger fan unit 100 and a generally correspondingly larger air-handling compartment 102.

As shown in FIG. 1, an air-handling compartment 102 is substantially divided into a discharge plenum 110 and an inlet plenum 112. The combined discharge plenum 110 and the inlet plenum 112 can be referred to as the airway path 120. The fan unit 100 may be situated in the discharge plenum 110 as shown), the inlet plenum 112, or partially within the inlet plenum 112 and partially within the discharge plenum 110. The portion of the airway path 120 in which the fan unit 100 is positioned may be generically referred to as the "fan section" (indicated by reference numeral 114). The size of the inlet cone 104, the size of the fan 106, the size of the motor 108, and the size of the fan frame (not shown) at least partially determine the length of the airway path 120. Filter banks 122 and/or cooling coils (not shown) may be added to the system either upstream or downstream of the fan units 100.

For example, a first exemplary structure requiring 23,6 m³/sec (50,000 cubic feet per minute) of airflow at 152 mm (six (6) inches) water gage pressure would generally require a prior art air-handling compartment 102 large enough to house a 1397 mm (55 inch) impeller, a 74,5 kW (100 horsepower) motor, and supporting framework. The prior art air-handling compartment 102, in turn would be approximately 2337 mm (92 inches) high by 2896 to 3734 mm (114 to 147 inches) wide and 2692 to 2845 mm (106 to 112 inches) long. The minimum length of the air-handling compartment 102 and/or airway path 120 would be dictated by published manufacturers data for a given fan type, motor size, and application. Prior art cabinet sizing guides show exemplary rules for configuring an air-handling compartment 102. These rules are based on optimization, regulations, and experimentation.

For example, a second exemplary structure includes a recirculation air handler used in semiconductor and pharmaceutical dean rooms requiring 2,3 m³/sec (26,000 cubic feet per minute) at 51 mm (two (2) inches) water gage pressure. This structure would generally require a prior art air-handling system with a air-handling compartment 102 large enough to house a 1118 mm (44 inch) impeller, a 18,6 kW (25 horsepower) motor, and supporting framework. The prior art air-handling compartment 102, in turn would be approximately 1981 mm (78 inches) high by 2515 mm (99 inches) wide and 2388 to 2540 mm (94 to 100 inches) long. The minimum length of the air-handling compartment 102 and/or airway path 120 would be dictated by published manufacturers data for a given fan type, motor size and application. Prior art cabinet sizing guides show exemplary rules for configuring an air-handling compartment 102. These rules are based on optimization, regulations, and experimentation.

These prior art air-handling systems have many problems including the following exemplary problems:
- Because real estate (e.g. structure space) is extremely expensive, the larger size of the air-handling compartment 102 is extremely undesirable.
- The single fan units 100 are expensive to produce and are generally • custom produced for each job.
- Single fan units 100 are expensive to operate.
- Single fan units 100 are inefficient in that they only have optimal or peak efficiency over a small portion of their operating range.
- If a single fan unit 100 breaks down, there is no air conditioning at all.
- The low frequency sound of the large fan unit 100 is hard to attenuate.
- The high mass and turbulence of the large fan unit 100 can cause undesirable vibration.

Height restrictions have necessitated the use of air-handling systems built with two fan units 100 arranged horizontally adjacent to each other. It should be noted, however, that a good engineering practice is to design air handler cabinets and discharge plenums 110 to be symmetrical to facilitate more uniform airflow across the width and height of the cabinet. Twin fan units 100 have been utilized where there is a height restriction and the unit is designed with a high aspect ratio to accommodate the desired flow rate. As shown in the Greenheck "Installation Operating and Maintenance Manual," if side-by-side installation was contemplated, there were specific instructions to arrange the fans such that there was at least one fan wheel diameter spacing between the fan wheels and at least one half a fan wheel diameter between the fan and the walls or ceilings. The Greenheck reference even specifically states that arrangements "with less spacing will experience performance losses." Normally, the air-handling system and air-handling compartment 102 are designed for a uniform velocity gradient of 2,5 m/sec (500 feet per minute) velocity in the direction of airflow. The two fan unit 100 air-handling systems, however, still substantially suffered from the problems of the single unit embodiments. There was no recognition of advantages by increasing the number of fan units 100 from one to two. Further, the two fan unit 100 section exhibits a non-uniform velocity gradient in the region following the fan unit 100 that creates uneven airflow across filters, coils, and sound attenuators.

It should be noted that electrical devices have taken advantage of multiple fan cooling systems. For example, U.S. Patent No. 6,414,845 to Bonet uses a multiple-fan modular cooling component for installation in multiple component-bay electronic devices. Although some of the advantages realized in the Bonet system would be realized in the present system, there are significant differences. For example, the Bonet system is designed to facilitate electronic component cooling by directing the output from each fan to a specific device or area. The Bonet system would not work to direct airflow to all devices in the direction of general airflow. Other patents such as U.S. Patent No. 4,767,262 to Simon and U.S. Patent No. 6,388,880 to El-Ghobashy et al. teach fan arrays for use with electronics.

Even in the computer and machine industries, however, operating fans in parallel is taught against as not providing the desired results except in low system resistance situations where fans operate in near free delivery.

DE-A-197 19 507 discloses a cabinet for telecommunications engineering having a frame rack containing at least one module carrier designed to receive plug-in units, and a ventilating Installation for cooling the plug-in units. The ventilating installation comprises at least one fan insert with several vertically blowing axial fans, which can be plugged in and integrated into the module carrier. The fan insert is located under transverse supports of the module carrier and has at least one plug connector at the rear, which makes contact with a secondary plug connector provided on the rear wiring panel.

EP-A-0004448 discloses a method and apparatus for control of a stationary fan-cooled cooling system such as a large diesel engine having a heat exchanger through which airflow is passed by fans driven by motors. To avoid waste of power by motors, and to extend their life, all the fluid to be cooled is continuously circulated through the heat exchanger and one of a number of fans is caused by a sequence control system to start operation on increase in fluid temperature sensed by a sensor, and one to stop on decrease of temperature. The control system selects the fan each time in accordance with a criterion related to running time. The control system may start a fan after a short delay on increase of temperature, and stop one after a substantial delay on decrease of temperature.

WO 96/19701, which represents the closest prior art, discloses an air handler having two fan units that operate at the same speed to provide a balanced inlet flow to the two fans from a common inlet plenum. The fan speed can be controlled by a controller to vary the outside air. Multiple units are provided to meet a total building air requirement.

### BRIEF SUMMARY OF THE INVENTION

The present invention is directed to an air-handler according to claim 1.

Preferred embodiments include the features of the dependant claims.

The foregoing and other objectives, features, and advantages of the invention will be more readily understood upon consideration of the following detailed description of the invention, taken in conjunction with the accompanying drawings.

### BRIEF DESCRIPTION OF THE SEVERAL VIEWS OF THE DRAWINGS

FIG. 1 is a side view of an exemplary prior art air-handling system having a single large fan unit within an air-handling compartment.
FIG. 2 is a side view of an exemplary fan array fan section in an air-handling system of the present invention having a plurality of small fan units within an air-handling compartment.
FIG. 3 is a plan or elevation view of a 4x6 exemplary fan array fan section in an air-handling system of the present invention having a plurality of small fan units within an air-handling compartment.
FIG. 4 is a plan or elevation view of a 5x5 exemplary fan array fan section in an air-handling system of the present invention having a plurality of small fan units within an air-handling compartment.
FIG. 5 is a plan or elevation view of a 3x4 exemplary fan array fan section in an air-handling system of the present invention having a plurality of small fan units within an air-handling compartment.
FIG. 6 is a plan or elevation view of a 3x3 exemplary fan array fan section in an air-handling system of the present invention having a plurality of small fan units within an air-handling compartment.
FIG. 7 is a plan or elevation view of a 3x1 exemplary fan array fan section in an air-handling system of the present invention having a plurality of small fan units within an air-handling compartment.
FIG. 8 is a plan or elevation view of an alternative exemplary fan array fan section in an air-handling system of the present invention in which a plurality of small fan units are arranged in a spaced pattern array within an air-handling compartment.
FIG. 9 is a plan or elevation view of an alternative exemplary fan array fan section in an air-handling system of the present invention in which a plurality of small fan units are arranged in a checker board array within an air-handling compartment.
FIG. 10 is a plan or elevation view of an alternative exemplary fan array fan section in an air-handling system of the present invention in which a plurality of small fan units are arranged in rows slightly offset array within an air-handling compartment.
FIG. 11 is a plan or elevation view of an alternative exemplary fan array fan section in an air-handling system of the present invention in which a plurality of small fan units are arranged in columns slightly offset array within an air-handling compartment.
FIG. 12 is a plan or elevation view of a 5x5 exemplary fan array fan section in an air handling system of the present invention running at 52% capacity by turning a portion of the fans on and a portion of the fans off.
FIG. 13 is a plan or elevation view of a 5x5 exemplary fan array fan section in an air-handling system of the present invention running at 32% capacity by turning a portion of the fans on and a portion of the fans off.
FIG. 14 is a side view of an alternative exemplary fan array fan section in an air-handling system of the present invention having a plurality of staggered small fan units within an air-handling compartment.

### DETAILED DESCRIPTION OF THE INVENTION

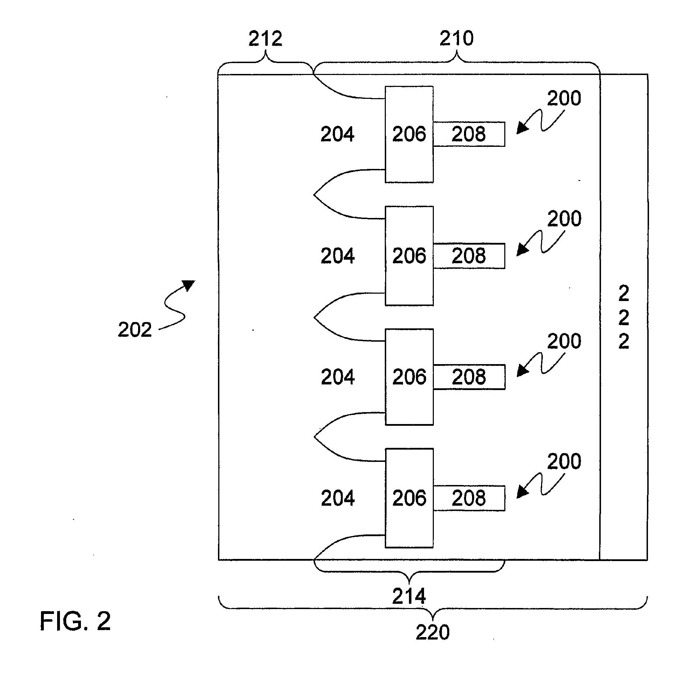

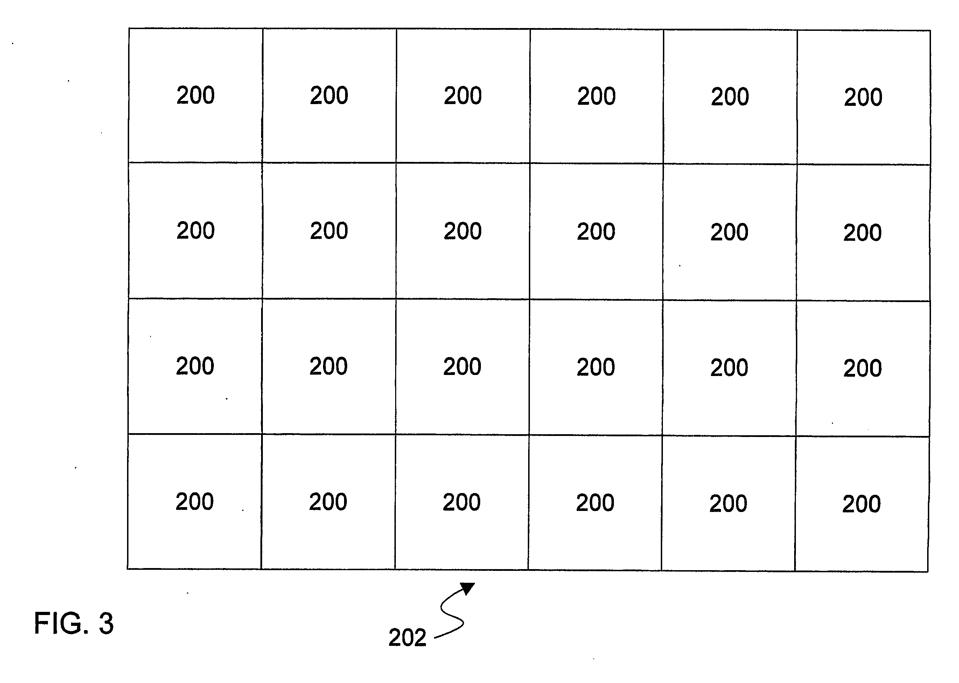

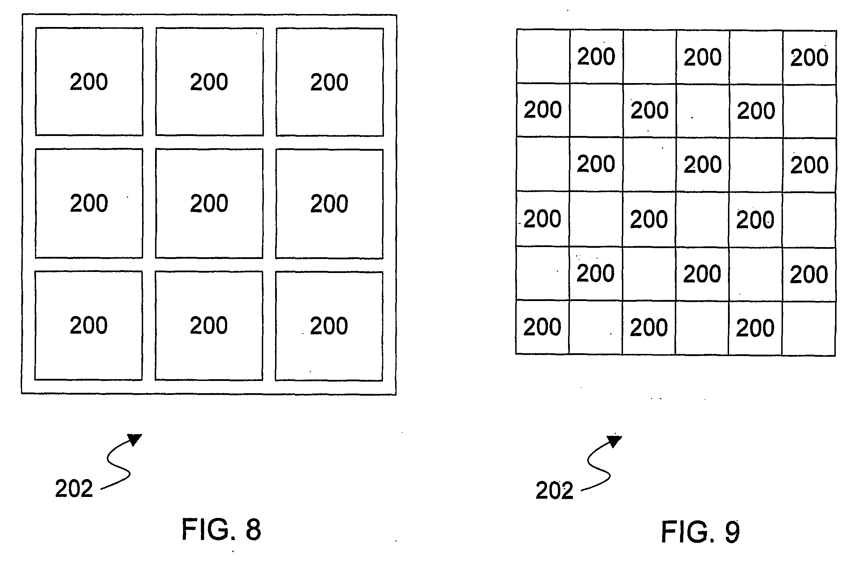

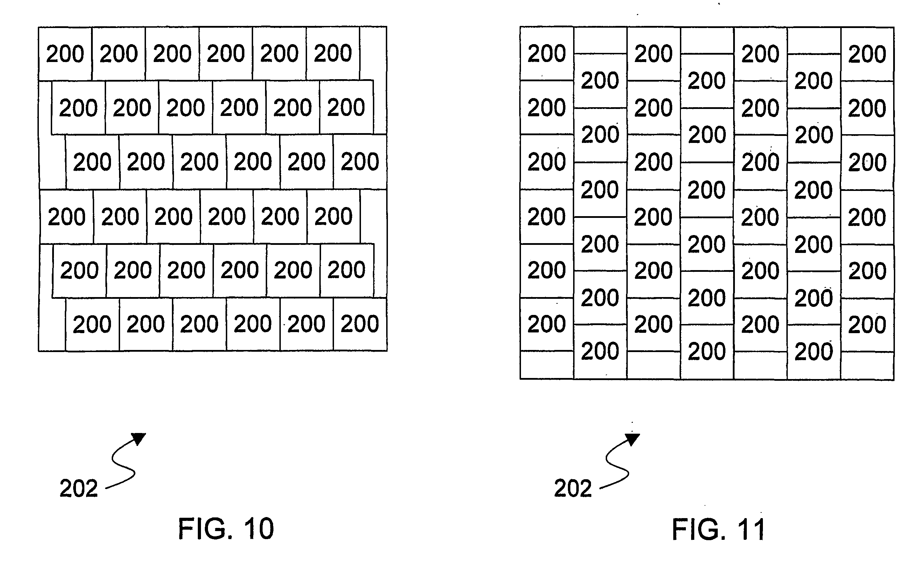

The present invention is directed to a fan array fan section in an air-handling system. As shown in FIGS. 2-11, the fan array fan section in the air-handling system uses a plurality of individual single fan units 200. In one preferred embodiment, the fan units 200 are arranged in a true array (FIGS. 3-7), but alternative embodiments may include, for example, alternative arrangements such as in a spaced pattern (FIG. 8), a checker board (FIG. 9), rows slightly offset (FIG. 10), or columns slightly offset (FIG. 11). As the present invention could be implemented with true arrays and/or alternative arrays, the term "array" is meant to be comprehensive.

The fan units 200 in the fan array of the present invention may be spaced as little as 20% of a fan wheel diameter. Optimum operating conditions for a closely arranged array may be found at distances as low as 30% to 60% of a fan wheel diameter. By closely spacing the fan units 200, more air may be moved in a smaller space. For example, if the fan wheels of the fan units 200 have a 51 mm (20 inch) fan wheel diameter, only a 102 mm (4 inch) space (20%) is needed between the outer periphery of one fan wheel and the outer periphery of the adjacent fan wheel (or a 2 inch space between the outer periphery of a fan wheel and an the adjacent wall or ceiling).

By using smaller fan units 200 it is possible to support the fan units 200 with less intrusive structure (fan frame). This can be compared to the large fan frame that supports prior art fan units 100 and functions as a base. This large fan frame must be large and sturdy enough to support the entire weight of the prior art fan units 100. Because of their size and position, the known fan frames cause interference with air flow. In the preferred embodiment, therefore, the fan units 200 of the fan array may be supported by a frame that supports the motors 108 with a minimum restriction to airflow.

As mentioned in the Background, others have tried using side-by-side installation of two fan units 100 arranged horizontally adjacent to each other within an air-handling system. As is also mentioned in the Background, fan arrays have been used in electronic and computer assemblies. However, in the air-handling system industry, it has always been held that there must be significant spacing between the horizontally arranged fan wheels and that arrangements with less spacing will experience performance losses. A single large fan moves all the air in a cabinet. Using two of the same or slightly smaller fans caused the air produced by one fan to interfere with the air produced by the other fan. To alleviate the interference problem, the fans had to be spaced within certain guidelines - generally providing a clear space between the fans of a distance of at least one wheel diameter (and a half a wheel diameter to an adjacent wall). Applying this logic, it would not have made sense to add more fans. And even if additional fans had been added, the spacing would have continued to be at least one wheel diameter between fans. Further, in the air-handling system industry, vertically stacking fan units would have been unthinkable because the means for securing the fan units would not have been conducive to such stacking (they are designed to be positioned on the floor only).

It should be noted that the plenum fan is the preferred fan unit 200 of the present invention. In particular, the APF-121, APF-141, APF-161, and APF-181 plenum fans (particularly the fan wheel and the fan cone) produced by Twin City Fan Companies, Ltd. of Minneapolis, Minnesota, U.S. has been found to work well. The reason that plenum fans work best is that they do not produce points of high velocity such as those produced by axial fans and housed centrifugal fans and large plenum fans. Alternative embodiments use known fan units or fan units yet to be developed that will not produce high velocity gradients in the direction of airflow. Still other embodiments, albeit less efficient, use fan units such as axial fans and/or centrifugal housed fans that have points of high velocity in the direction of airflow.

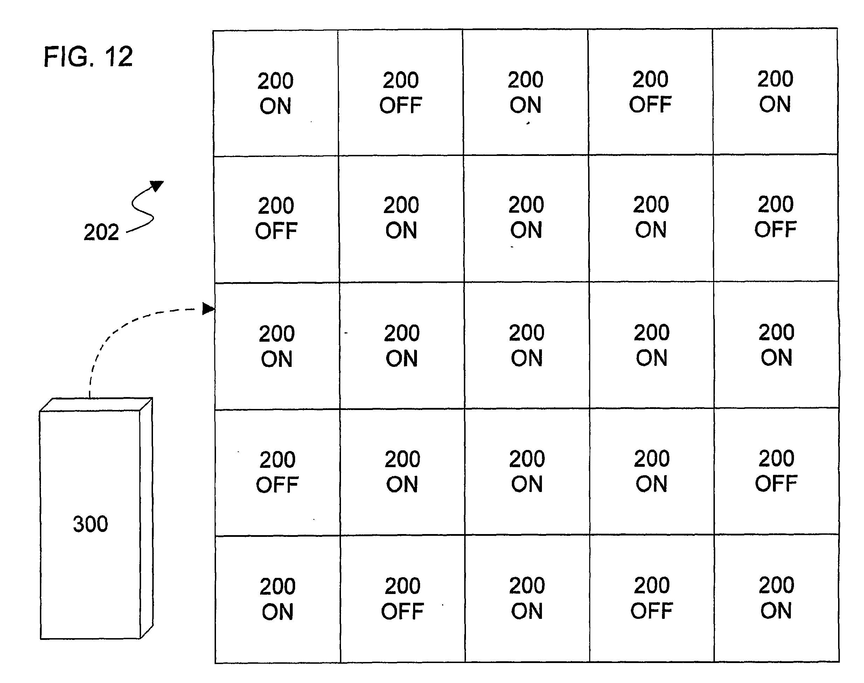

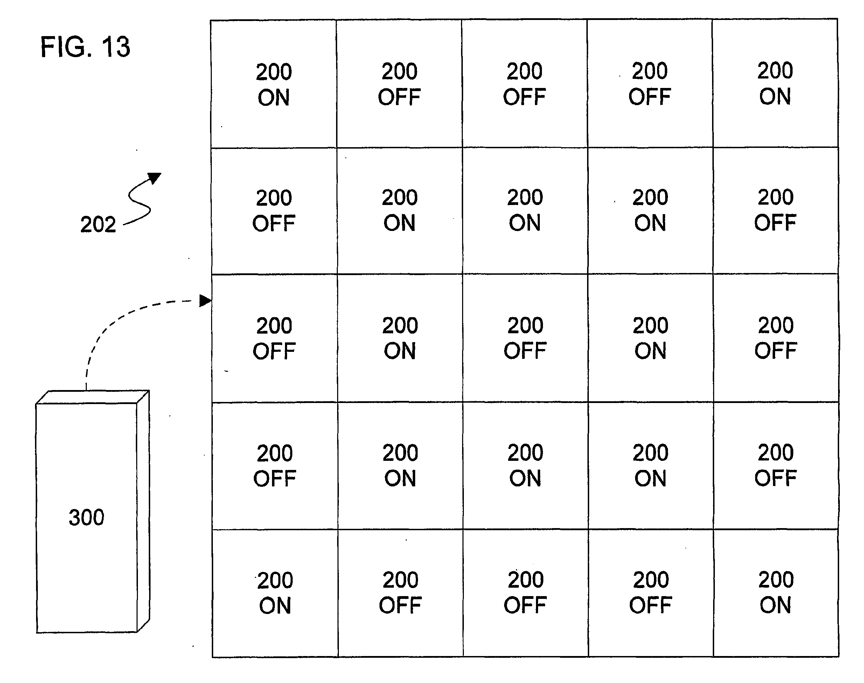

In the preferred embodiment, each of the fan units 200 in the fan array fan section in the air-handling system is controlled by an array controller 300 (FIGS. 12 and 13). In one preferred embodiment, the array controller 300 may be programmed to operate the fan units 200 at peak efficiency. In this peak efficiency embodiment, rather than running all of the fan units 200 at a reduced efficiency, the array controller 300 turns off certain fan units 200 and runs the remaining fan units 200 at peak efficiency. In an alternative embodiment, the fan units 200 could all run at the same power level (e.g. efficiency and/or flow rate) of operation.

Another advantage of the present invention is that the array controller 300 (which may be a variable frequency drive (VFD)) used for controlling fan speed and thus flow rate and pressure, could be sized for the actual brake horsepower of the fan array fan section in the air-handling system. Since efficiency of the fan wall array can be optimized over a wide range of flow rates and pressures, the actual operating power consumed by the fan array is substantially less than the actual operating power consumed by the comparable prior art air-handling systems and the array controller's power could be reduced accordingly. The array controller 300 could be sized to the actual power consumption of the fan array where as the controller (which may have been a variable frequency drive) in a traditional design would be sized to the maximum nameplate rating of the motor per Electrical Code requirements. An example of a prior art fan design supplying 23,6 m³/sec (50,000 cubic feet per minute) of air at 64 mm (2.5 inches) pressure, would require a 37,3 kW (50 horsepower) motor and 37,3 kW (50 horsepower) controller. The new invention will preferably use an array of fourteen 1,5 kW (2 horsepower) motors and a 22,4 kW (30 horsepower) array controller 300.

This invention solves many of the problems of the prior art air-handling systems including, but not limited to real estate, reduced production costs, reduced operating expenses, increased efficiency, improved airflow uniformity, redundancy, sound attenuation advantages, and reduced vibration.

### Controllability

As mentioned, preferably each of the fan units 200 in the fan array fan section in the air-handling system is controlled by an array controller 300 (FIGS. 12 and 13) that may be programmed to operate the fan units 200 at peak efficiency. In this peak efficiency embodiment, rather than running all of the fan units 200 at a reduced efficiency, the array controller 300 is able to turn off certain fan units 200 and run the remaining fan units 200 at peak efficiency. Preferably, the array controller 300 is able to control fan units 200 individually, in predetermined groupings, and/or as a group as a whole.

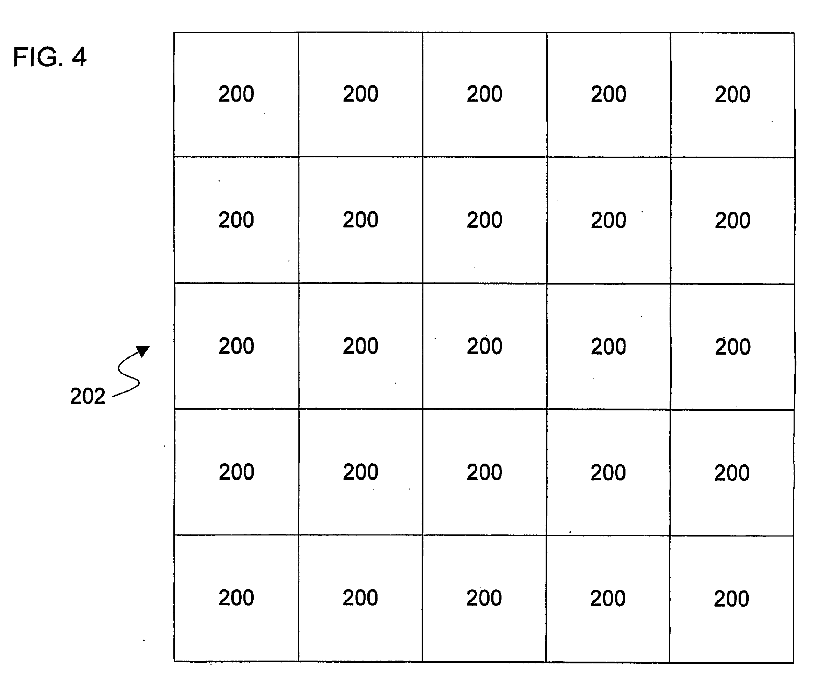

For example, in the 5x5 fan array such as that shown in FIGS. 4, 12, and 13, a person desiring to control the array may select desired air volume, a level of air flow, a pattern of air flow, and/or how many fan units 200 to operate. Turning first to air volume, each fan unit 200 in a 5x5 array contributes 4% of the total air. In variable air volume systems, which is what most structures have, only the number of fan units 200 required to meet the demand would operate. A control system (that may include the array controller 300) would be used to take fan units 200 on line (an "ON" fan unit 200) and off line (an "OFF" fan unit 200) individually. This ability to turn fan units 200 on and off could effectively eliminate the need for a variable frequency drive. Similarly, each fan unit 200 in a 5x5 array uses 4% of the total power and produces 4% of the level of air flow. Using a control system to take fan units 200 on line and off line allows a user to control power usage and/or air flow. The pattern of air flow can also be controlled if that would be desirable. For example, depending on the system it is possible to create a pattern of air flow only around the edges of a cabinet or air only at the top. Finally, individual fan units 200 may be taken on line and off line. This controllability may be advantageous if one or more fan units 200 are not working properly, need to be maintained (e.g. needs general service), and/or need to be replaced. The problematic individual fan units 200 may be taken off line while the remainder of the system remains fully functional. Once the individual fan units 200 are ready for use, they may be brought back on line.

A further advantage to taking fan units 200 on and off line occurs when building or structure control systems require low volumes of air at relatively high pressures. In this case, the fan units 200 could be modulated to produce a stable operating point and eliminate the surge effects that sometimes plague structure owners and maintenance staff. The surge effect is where the system pressure is too high for the fan speed at a given volume and the fan unit 200 has a tendency to go into stall.

Examples of controllability are shown in FIGS. 12 and 13. In the fan array fan section in the air-handling system shown in FIG. 12, the array controller 300 alternates "ON" fan units 200 and "OFF" fan units 200 in a first exemplary pattern as shown so that the entire system is set to operate at 52% of the maximum rated air flow but only consumes 32% of full rated power. These numbers are based on exemplary typical fan operations in a structure. FIG. 13 shows the fan array fan section in the air-handling system set to operate at 32% of the maximum rated air flow but only consumes 17% of full rated power. These numbers are based on exemplary typical fan operations in a structure. In this embodiment, the array controller 300 creates a second exemplary pattern of "OFF" fan units 200 and "ON" fan units 200 as shown.

### Real Estate

The fan array fan section in the air-handling section 220 of the present invention preferably uses (60% to 80%) less real estate than prior art discharge plenums 120 (with the hundred series number being prior art as shown in FIG. 1 and the two hundred series number being the present invention as shown in FIG. 2) in air-handling systems. Comparing the prior art (FIG. 1) and the present invention (FIG. 2) shows a graphical representation of this shortening of the airway path 120, 220. There are many reasons that using multiple smaller fan units 200 can reduce the length of the airway path 120, 220. For example, reducing the size of the fan unit 100, 200 and motor 108, 208 reduces the length of the discharge plenum 110, 210. Similarly, reducing the size of the inlet cone 104, 204 reduces the length of the inlet plenum 112, 212. The length of the discharge plenum 110, 210 can also be reduced because air from the fan array fan section in the air-handling system of the present invention is substantially uniform whereas the prior art air-handling system has points of higher air velocity and needs time and space to mix so that the flow is uniform by the time it exits the air-handling compartment 102, 202. (This can also be described as the higher static efficiency in that the present invention eliminates the need for settling means downstream from the discharge of a prior art fan system because there is little or no need to transition from high velocity to low velocity.) The fan array fan section in the air-handling system takes in air from the inlet plenum 212 more evenly and efficiently than the prior art air-handling system so that the length of the inlet plenum 112, 212 may be reduced.

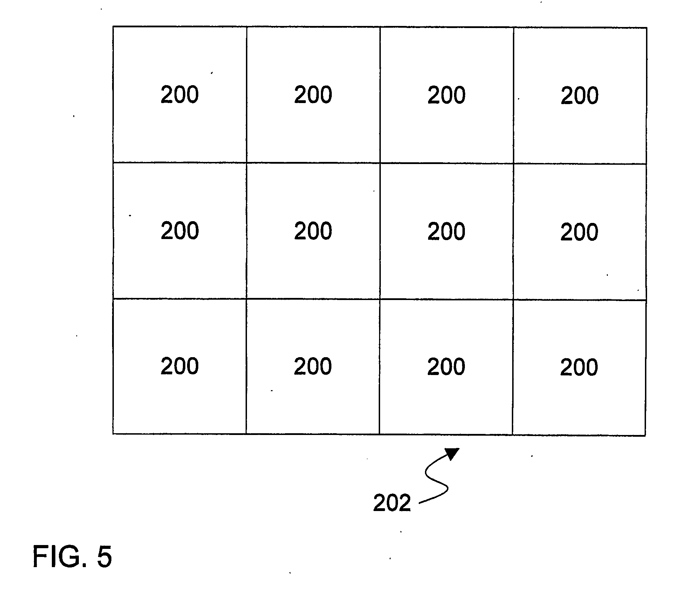

For purposes of comparison, the first exemplary structure set forth in the Background of the invention (a structure requiring 23,6 m³/sec (50,000 cubic feet per minute) of airflow at a pressure of 152 mm (six (6) inches) water gage) will be used. Using the first exemplary structure, an exemplary embodiment of the present invention could be served by a nominal discharge plenum 210 of 2261 mm (89 inches) high by 4064 mm (160 inches) wide and 762 to 914 mm (30 to 36 inches) long (as compared to 2692 to 2845 mm (106 to 112 inches) long in the prior art embodiments). The discharge plenum 210 would include a 3x4 fan array fan section in the air-handling system such as the one shown in FIG. 5) having 12 fan units 200. The space required for each exemplary fan unit 200 would be a rectangular cube of approximately 610 to 762 mm (24 to 30 inches) on a side depending on the array configuration. The airway path 220 is 1067 to 1219 mm (42 to 48 inches) (as compared to 2235 to 3531 mm (88 to 139 inches) in the prior art embodiments).

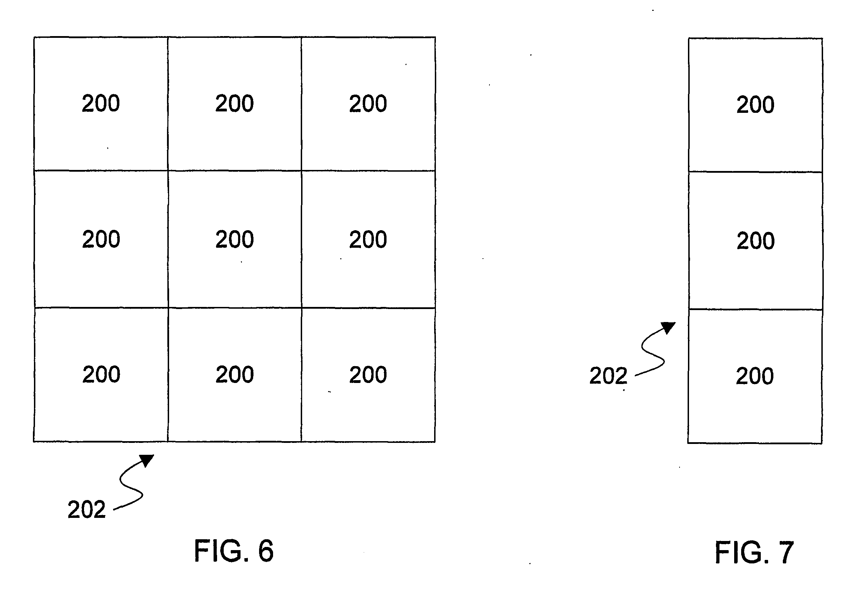

For purposes of comparison, the second exemplary structure set forth in the Background of the Invention (a structure requiring 12,3 m³/sec (26,000 cubic feet per minute) of airflow at a pressure of 51 mm (two (2) inches) water gage) will be used. Using the second exemplary structure, an exemplary embodiment of the present invention could be served by a nominal discharge plenum 210 of 2134 mm (84 inches) high by 2134 mm (84 inches) wide, and 762 to 914 mm (30 to 36 inches) long (as compared to 2388 mm to 2540 mm (94 to 100 inches) long in the prior art embodiments). The discharge plenum would include a 3x3 fan array fan section in the air-handling system (such as the one shown in FIG. 6) having 9 fan units 200. The space required for each exemplary fan unit 200 would be a rectangular cube of approximately 610 to 762 mm (24 to 30 inches) on a side depending on the array configuration. The airway path 220 is 1067 to 1219 mm (42 to 48 inches) (as compared to 1803 to 2913 mm (71 to 95 inches) in the prior art embodiments).

### Reduced Production Costs

It is generally more cost effective to build the fan array fan section in the air-handling system of the present invention as compared to the single fan unit 100 used in prior art air-handling systems. Part of this cost savings may be due to the fact that individual fan units 200 of the fan array can be mass-produced. Part of this cost savings may be due to the fact that it is less expensive to manufacture smaller fan units 200. Whereas the prior art single fan units 100 were generally custom built for the particular purpose, the present invention could be implemented on a single type of fan unit 200. In alternative embodiments, there might be several fan units 200 having different sizes and/or powers (both input and output). The different fan units 200 could be used in a single air-handling system or each air-handling system would have only one type of fan unit 200. Even when the smaller fan units 200 are custom made, the cost of producing multiple fan units 200 for a particular project is almost always less that the cost of producing a single large prior art fan unit 100 for the same project. This may be because of the difficulties of producing the larger components and/or the cost of obtaining the larger components necessary for the single large prior art fan unit 100. This cost savings also extends to the cost of producing a smaller air-handling compartment 202.

In one preferred embodiment of the invention, the fan units 200 are modular such that the system is "plug and play." Such modular units may be implemented by including structure for interlocking on the exterior of the fan units 200 themselves. Alternatively, such modular units may be implemented by using separate structure for interlocking the fan units 200. In still another alternative embodiment, such modular units may be implemented by using a grid system into which the fan units 200 may be placed.

### Reduced Operating Expenses

The fan array fan section in the air-handling system of the present invention preferably are less expensive to operate than prior art air-handling systems because of greater flexibility of control and fine tuning to the operating requirements of the structure. Also, by using smaller higher speed fan units 200 that require less low frequency noise control and less static resistance to flow.

### Increased Efficiency

The fan array fan section in the air-handling system of the present invention preferably is more efficient than prior art air-handling systems because each small fan unit 200 can run at peak efficiency. The system could turn individual fan units 200 on and off to prevent inefficient use of particular fan units 200. It should be noted that an array controller 300 could be used to control the fan units 200. As set forth above, the array controller 300 turns off certain fan units 200 and runs the remaining fan units 200 at peak efficiency.

### Redundancy

Multiple fan units 200 add to the redundancy of the system. If a single fan unit 200 breaks down, there will still be cooling. The array controller 300 may take disabled fan units 200 into consideration such that there is no noticeable depreciation in cooling or air flow rate. This feature may also be useful during maintenance as the array controller 300 may turn off fan units 200 that are to be maintained offline with no noticeable depreciation in cooling or airflow rate.

### Sound Attenuation Advantages

The high frequency sound of the small fan units 200 is easier to attenuate than the low frequency sound of the large fan unit. Because the fan wall has less low frequency sound energy, shorter less costly sound traps are needed to attenuate the higher frequency sound produced by the plurality of small fan units 200 than the low frequency sound produced by the single large fan unit 100. The plurality of fan units 200 will each operate in a manner such that acoustic waves from each unit will interact to cancel sound at certain frequencies thus creating a quieter operating unit than prior art systems.

### Reduced Vibration

The multiple fan units 200 of the present invention have smaller wheels with lower mass and create less force due to residual unbalance thus causing less vibration than the large fan unit. The overall vibration of multiple fan units 200 will transmit less energy to a structure since individual fans will tend to cancel each other due to slight differences in phase. Each fan unit 200 of the multiple fan units 200 manage a smaller percentage of the total air handling requirement and thus produce less turbulence in the air stream and substantially less vibration.

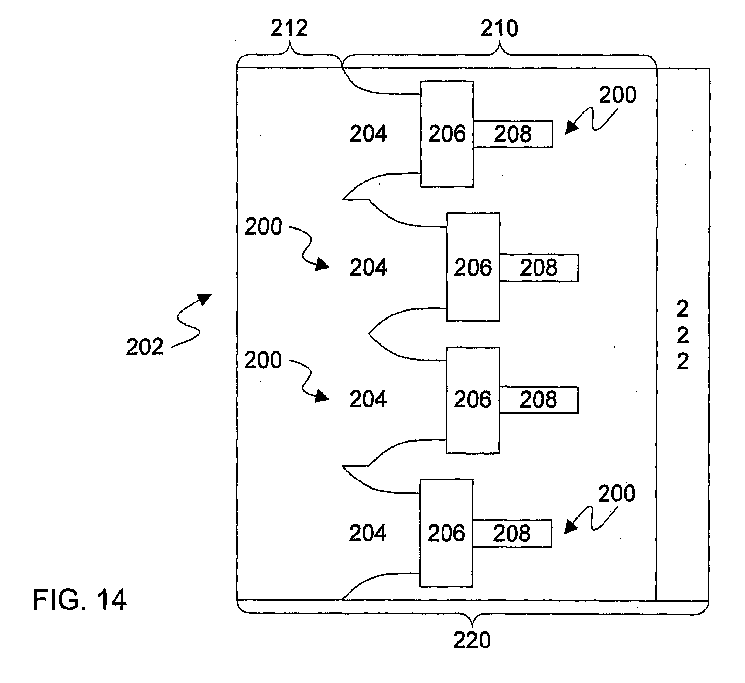

It should be noted that FIG. 3 shows a 4x6 fan array fan section in the air-handling system having twenty-four fan units 200, FIG. 4 shows a 5x5 fan array fan section in the air-handling system having twenty-five fan units 200, FIG. 5 shows a 3x4 fan array fan section in the air-handling system having twelve fan units 200, FIG. 6 shows a 3x3 fan array fan section in the air-handling system having nine fan units 200, and FIG. 7 shows a 3x1 fan array fan section in the air-handling system having three fan units 200. It should be noted that the array may be of any size or dimension of more than two fan units 200. It should be noted that although the fan units 200 may be arranged in a single plane (as shown in FIG. 2), an alternative array configuration could contain a plurality of fan units 200 that are arranged in a staggered configuration (as shown in FIG. 14) in multiple planes. It should be noted that cooling coils (not shown) could be added to the system either upstream or downstream of the fan units 200. It should be noted that, although shown upstream from the fan units 200, the filter bank 122, 222 could be downstream.

It should be noted that an alternative embodiment would use a horizontally arranged fan array. In other words, the embodiments shown in FIGS. 2-14 could be used horizontally or vertically or in any direction perpendicular to the direction of air flow. For example, if a vertical portion of air duct is functioning as the air-handling compartment 202, the fan array may be arranged horizontally. This embodiment would be particularly practical in an air handling compartment for a return air shaft.

It should be noted that the fan section 214 may be any portion of the airway path 220 in which the fan units 200 are positioned. For example, the fan units 200 may be situated in the discharge plenum 210 (as shown), the inlet plenum 212, or partially within the inlet plenum 212 and partially within the discharge plenum 210. It should also be noted that the air-handling compartment 202 may be a section of air duct.

The terms and expressions that have been employed in the foregoing specification are used as terms of description and not of limitation, and are not intended to exclude equivalents of the features shown and described or portions of them. The scope of the invention is defined and limited only by the claims that follow.

## Claims

1. An air-handler comprising:
a fan array fan section (114):
an air-handling compartment (202);
a plurality of fan units (200) arranged in a fan array (214) in said fan array from section (114); wherein:
said fan array (214) has at least one fan unit (200) arranged vertically on at least one other fan unit (200);
said fan array (214) is positioned within said air-handling compartment (202);
the air handling compartment (202) has a discharge plenum (210) for receiving air from the plurality of fan units and for delivering air to a building ventilation system;
said air-handler further comprises an array controller (300) to control the speed of the fan units in said array and thus air flow rate and pressure and wherein said plurality of fan units (200) gives redundancy within the air handler such that if a fan unit (200) is disabled, the array controller (300) takes the disabled fan unit (200) into consideration such that there is no noticeable depreciation in coding or airflow rate.

2. The air-handler of claim 1 further comprising an array controller (300) programmed to operate said plurality of fan units (200) at peak efficiency.

3. The air-handler of claim 1 or 2, wherein said air-handling compartment (202) has an airway path (220), said airway path being less than 1829mm (72 inches).

4. The air-handler of any of claims 1 to 3, wherein said plurality of fan units (200) are arranged in a fan array configuration selected from the group consisting of:
(a) a true array configuration;
(b) a spaced pattern array configuration;
(c) a checker board array configuration;
(d) rows slightly offset array configuration;
(e) columns slightly offset array configuration; and
(f) a staggered array configuration.

5. The air-handler of claim 1 wherein the control system is further operable to run at a select level for one or more of i) air volume, ii) level of airflow, iii) pattern of airflow, or iv) how many of said fan units to operate.

6. The air-handler of claims 1 to 5, wherein said fan units (200) are plenum fans.

7. The air-handler of claims 1 to 6, wherein each of said fan units (200) is modular in nature and wherein the air-handler further comprises a grid system into which the fan units may be placed so that the grid system separates adjacent fan units.

8. The air-hander of claims 1 to 6, wherein said fan units are separate modular units, adjacent said modular units being joined to one another with interlocking structures to form said fan array.

9. The air-handler of any previous claim wherein the spacing between the outer peripheries of fan wheels of adjacent fans is in the range of 20% to 60% of the fan wheel diameter.

10. The air-handler of any previous claim wherein each fan unit of the fan array occupies a rectangular cube having a width and height in the range of 609mm to 762mm (24 to 30 inches).

11. The air-handler of claim 1 wherein the control system is further operable to turn off certain fan units (200) and turn on remaining said fan units (200)

## Patentansprüche

1. Luftbehandlungssystem, umfassend:
einen Lüfteranordnungs-Lüfterabschnitt (114);
eine Luftbehandlungskammer (202);
eine Mehrzahl von Lüftereinheiten (200), die in einer Lüfteranordnung (214) im Lüfteranordnungs-Lüfterabschnitt (114) angeordnet ist;
wobei:
die Lüfteranordnung (214) mindestens eine Lüftereinheit (200) aufweist, die senkrecht auf mindestens einer anderen Lüftereinheit (200) angeordnet ist;
die Lüfteranordnung (214) innerhalb der Luftbehandlungskammer (202) positioniert ist;
die Luftbehandlungskammer (202) einen Ausgabeluftraumlüfter (210) aufweist, um Luft von der Mehrzahl von Lüftereinheiten zu empfangen und Luft an das Belüftungssystem eines Gebäudes zu liefern;
das Luftbehandlungssystem ferner eine Anordnungssteuereinrichtung (300) umfasst, um die Geschwindigkeit der Lüftereinheiten in der Anordnung zu steuern und somit die Luftströmungsgeschwindigkeit und -druck und wobei die Mehrzahl von Lüftereinheiten (200) innerhalb des Luftbehandlungssystems redundant ist, so dass, wenn eine Lüftereinheit (200) ausgeschaltet ist, die Anordnungssteuereinrichtung (300) die ausgeschaltete Lüftereinheit (200) berücksichtigt, so dass kein erkennbarer Verlust der Kühl- oder Luftströmungsgeschwindigkeit zustande kommt.

2. Luftbehandlungssystem nach Anspruch 1, ferner umfassend eine Anordnungssteuereinrichtung (300), die programmiert ist, um die Mehrzahl von Lüftereinheiten (200) bei Höchstleistung laufen zu lassen.

3. Luftbehandlungssystem nach Anspruch 1 oder 2, wobei die Luftbehandlungskammer (202) einen Luftwegeverlauf (220) aufweist, wobei der Luftwegeverlauf weniger als 1829 mm (72 Inch) beträgt.

4. Luftbehandlungssystem nach einem der Ansprüche 1 bis 3, wobei die Mehrzahl von Lüftereinheiten (200) in einer Lüfteranordnungskonfiguration angeordnet ist, ausgewählt aus der Gruppe bestehend aus:
(a) einer ausgerichteten Anordnungskonfiguration;
(b) einer Anordnungskonfiguration mit Abstandsmuster;
(c) einer Schachbrettanordnungskonfiguration;
(d) einer Anordnungskonfiguration mit etwas versetzten Reihen;
(e) einer Anordnungskonfiguration mit etwas versetzten senkrechten Reihen; und
(f) einer versetzten Anordnungskonfiguration.

5. Luftbehandlungssystem nach Anspruch 1, wobei das Steuersystem ferner betriebsfähig ist, um bei einem ausgewählten Stand für einen oder mehrere von i) Luftvolumen, ii) Stand der Luftströmung, iii) Muster der Luftströmung, oder iv) wie viele der Lüftereinheiten in Betrieb sein sollen, zu laufen.

6. Luftbehandlungssystem nach den Ansprüchen 1 bis 5, wobei die Lüftereinheiten (200) Lufttraumlüfter sind.

7. Luftbehandlungssystem nach den Ansprüchen 1 bis 6, wobei jede der Lüftereinheiten (200) von Natur aus modular ist und wobei das Luftbehandlungssystem ferner ein Gittersystem umfasst, in das die Lüftereinheiten platziert werden können, so dass das Gittersystem benachbarte Lüftereinheiten voneinander trennt.

8. Luftbehandlungssystem nach den Ansprüchen 1 bis 6, wobei die Lüftereinheiten getrennte modulare Einheiten sind, die mit Verriegelungsstrukturen miteinander verbunden sind, um die Lüfteranordnung zu bilden.

9. Luftbehandlungssystem nach einem der vorangehenden Ansprüche, wobei der Abstand zwischen dem Außenumfang der Schaufelräder von benachbarten Lüftern im Bereich von 20 % bis 60 % des Schaufelraddurchmessers liegt.

10. Luftbehandlungssystem nach einem der vorangehenden Ansprüche, wobei jede Lüftereinheit der Lüfteranordnung einen rechteckigen Würfel mit einer Breite und Höhe im Bereich von 609 mm bis 762 mm (24 bis 30 Inch) in Anspruch nimmt.

11. Luftbehandlungssystem nach Anspruch 1, wobei das Steuersystem ferner betriebsfähig ist, um einige Lüftereinheiten (200) auszuschalten und übrig gebliebene Lüftereinheiten (200) einzuschalten.

## Revendications

1. Système de traitement de l'air, comprenant:
une section de ventilateurs à réseau de ventilateurs (114):
un compartiment de traitement de l'air (202);
une pluralité d'unités de ventilateur (200) arrangées en un réseau de ventilateurs (214) dans ladite section de ventilateurs à réseau de ventilateurs (114), dans laquelle:
ledit réseau de ventilateurs (214) comporte au moins une unité de ventilateur (200) arrangée verticalement sur au moins une autre unité de ventilateur (200);
ledit réseau de ventilateurs (214) étant positionné à l'intérieur dudit compartiment de traitement de l'air (202);
le compartiment de traitement de l'air (202) comportant un plénum de décharge (210) pour recevoir l'air de la pluralité d'unités de ventilateur et pour délivrer l'air à un système de ventilation de local ;
ledit système de traitement de l'air comprenant en outre un contrôleur de réseau (300) pour contrôler la vitesse des unités de ventilateur dans ledit réseau et donc le débit et la pression d'air et dans lequel la pluralité d'unités de ventilateur (200) est redondante dans le système de traitement de l'air de sorte que si une unité de ventilateur (200) est désactivée, le système de contrôle de réseau (300) prend en considération l'unité de ventilateur désactivée (200) de sorte qu'il n'y a aucune dépréciation sensible dans le taux de refroidissement ou dans le débit d'air.

2. Système de traitement de l'air selon la revendication 1, comprenant en outre un contrôleur de réseau (300) programmé pour actionner ladite pluralité d'unités de ventilateur (200) au maximum de ses possibilités.

3. Système de traitement de l'air selon la revendication 1 ou 2, dans lequel ledit compartiment de traitement de l'air (202) comporte un chemin d'air (220), ledit chemin d'air ayant moins de 1829 mm (72 pouces).

4. Système de traitement de l'air selon l'une quelconque des revendications 1 à 3, dans lequel ladite pluralité d'unités de ventilateur (200) est arrangée en une configuration de réseau de ventilateurs sélectionnée dans le groupe consistant en :
(a) une configuration de réseau réelle ;
(b) une configuration de réseau à structure espacée ;
(c) une configuration de réseau à damier ;
(d) une configuration de réseau à rangée légèrement décalée ;
(e) une configuration de réseau à colonnes légèrement décalées ; et
(f) une configuration de réseau à échelonnement.

5. Système de traitement de l'air selon la revendication 1, dans lequel le système de contrôle peut en outre fonctionner à un niveau de sélection pour un ou plusieurs des indices suivants : i) volume d'air, ii) niveau du flux d'air, iii) modèle de flux d'air, ou iv) le nombre d'unités de ventilateur à opérer.

6. Système de traitement de l'air selon les revendications 1 à 5, dans lequel lesdites unités de ventilateur (200) sont des ventilateurs plénum.

7. Système de traitement selon les revendications 1 à 6, dans lequel chacune desdites unités de ventilateur (200) est modulaire en nature et dans lequel le système de traitement de l'air comprend en outre un système de grille dans lequel les unités de ventilateur peuvent être placées de sorte que le système de grille sépare les unités de ventilateur adjacentes.

8. Système de traitement de l'air selon les revendications 1 à 6, dans lequel lesdites unités de ventilateur sont des unités modulaires séparées, lesdites unités modulaires adjacentes étant jointes les unes aux autres par des structures d'interverrouillage pour former ledit réseau de ventilateurs.

9. Système de traitement de l'air selon l'une quelconque des revendications précédentes dans lequel l'espace entre les périphéries extérieures des roues de ventilateur des ventilateurs adjacents est compris entre 20% et 60% du diamètre de la roue de ventilateur.

10. Système de traitement de l'air selon l'une quelconque des revendications précédentes dans lequel chaque unité de ventilateur du réseau de ventilateurs occupe un cube rectangulaire ayant une largeur et une hauteur comprise entre 609 mm et 762 mm (24 à 30 pouces).

11. Système de traitement de l'air selon la revendication 1 dans lequel le système de contrôle peut en outre désactiver certaines unités de ventilateur (200) et activer lesdites unités de ventilateur restantes (200).
